# EUROPÄISCHE PATENTSCHRIFT

(11) **EP 2 675 596 B1**
(45) Veröffentlichungstag und Bekanntmachung des Hinweises auf die Patenterteilung: **12.06.2019**
(21) Anmeldenummer: 12703517.8
(22) Anmeldetag: 07.02.2012
(51) Int. Cl.: B25B 27/10, B30B 15/16, H02P 3/02

(54) **VERFAHREN ZUM AUTOMATISCHEN STEUERN EINES ELEKTRO-HYDRAULISCHEN PRESSWERKZEUGES**
METHOD FOR AUTOMATICALLY CONTROLLING AN ELECTROHYDRAULIC PRESSING TOOL
PROCÉDÉ DE COMMANDE AUTOMATIQUE D'UN OUTIL DE PRESSAGE ÉLECTROHYDRAULIQUE

(30) Priorität: 18.02.2011 DE 102011011742
(43) Veröffentlichungstag der Anmeldung: 25.12.2013
(73) Patentinhaber: Novopress GmbH Pressen und Presswerkzeuge & Co. KG, 41460 Neuss (DE)
(72) Erfinder: ODENTHAL, Günther, 41238 Mönchengladbach (DE); HANISCH, Jörg, 42285 Wuppertal (DE); JECHOW, Dennis, 42369 Wuppertal (DE)
(74) Vertreter: dompatent von Kreisler Selting Werner - Partnerschaft von Patent- und Rechtsanwälten mbB
(86) Internationale Anmeldenummer: PCT/EP2012/052048
(87) Internationale Veröffentlichungsnummer: WO 2012/110362

(56) Entgegenhaltungen:
- EP-A1- 0 941 813
- WO-A1-97/10908
- DE-A1- 19 825 160
- DE-A1-102008 024 018
- DE-C1- 10 106 360
- DE-U1- 20 308 966

## Beschreibung

Die Erfindung betrifft ein Verfahren zum automatischen Steuern eines elektro-hydraulischen Presswerkzeuges, insbesondere zur Herstellung von Rohrverbindungen.

Zur Herstellung von Rohrverbindungen mit Hilfe von Pressfitings ist es bekannt elektro-hydraulische Presswerkzeuge einzusetzen, durch die eine plastische Verformung der Pressfitings erfolgt. Ein hierfür verwendetes elektrohydraulisches Presswerkzeug weist einen in einem Hydraulikzylinder angeordneten Hydraulikkolben auf. Zum Betätigen des Presswerkzeuges, das heißt insbesondere zum Schließen von Pressbacken, wird von einer Hydraulikpumpe aus einem Fluidreservoir Fluid in den Hydraulikzylinder gepumpt. Die Hydraulikpumpe ist hierbei von einem Elektromotor angetrieben. Der Hydraulikzylinder ist ferner mit einem Ventil, wie einem Überdruckventil verbunden. Bei Erreichen eines Grenzdrucks in dem Hydraulikzylinder öffnet das üblicherweise mechanische Überdruckventil automatisch, so dass das Fluid in das Reservoir zurückströmen kann. Im nachfolgenden Pressvorgang wird der Hydraulikkolben beispielsweise durch eine Feder in die Ausgangsstellung zurückgedrückt, wobei hierdurch auch das Fluid in das Reservoir zurückgefördert wird. Der Elektromotor muss nach Beendigen des Pressvorgangs abgeschaltet werden. Das Abschalten des Elektromotors kann durch den Benutzer, beispielsweise durch Loslassen des Starters erfolgen.

Um ein automatisches Abschalten des Elektromotors zu bewirken, ist es bekannt die Drehzahl des Elektromotors zu messen. Beim Öffnen des Überdruckventils sinkt der Druck im Hydraulikzylinder schlagartig, so dass sich die Motordrehzahl erhöht. Diese Drehzahlerhöhung kann detektiert werden und als Abschaltsignal für den Elektromotor dienen. Hierzu ist zur Drehzahlmessung ein externer Sensor erforderlich.

Ferner ist aus EP 1 230 998 ein automatisches Verfahren zum Abschalten des Elektromotors bekannt, in dem die Stromaufnahme des Elektromotors gemessen wird. Beim Öffnen des Überdruckventils sinkt der Strom. Mit Hilfe eines Mikroprozessors wird das Unterschreiten eines gespeicherten Stromwertes ermittelt und sobald dieser vorgegebene feste Stromwert unterschritten ist, der Elektromotor abgeschaltet. Dieses Verfahren weist allerdings den Nachteil auf, dass der am Ende des Pressvorgangs, das heißt beim Öffnen des Überdruckventils herrschende Strom von äußeren Einflussfaktoren abhängig ist. Der tatsächlich am Ende des Pressvorgangs herrschende Strom ist beispielsweise vom Ladezustand des Akkus, vom Zustand des Motors (Zustand der Kohlebürsten, innere Widerstände etc.), der Temperatur des Hydrauliköls sowie auch des Verschleißes der Mechanik des gesamten Presswerkes abhängig. Dies kann zur Folge haben, dass der beim Öffnen des Überdruckventils herrschende Strom vergleichsweise hoch ist, so dass erst nach einem zeitlich langen Stromabfall der gespeicherte Ausschaltstromwert erreicht wird. Sofern der beim Öffnen des Überdrucks herrschende Strom geringer als der Ausschaltstromwert ist, besteht die Problematik, dass kein Ausschalten erfolgt.

Aufgabe der Erfindung ist es, ein Verfahren zum automatischen Steuern eines elektro-hydraulischen Presswerkzeuges zu schaffen, dessen Zuverlässigkeit verbessert ist.

Die Lösung der Aufgabe erfolgt durch die Merkmale des Anspruchs 1.

Das elektro-hydraulische Presswerkzeug, mit dessen Hilfe das erfindungsgemäße Verfahren durchgeführt wird, weist einen Hydraulikkolben zur Betätigung des Presswerkzeuges, insbesondere zur Betätigung von Pressbacken auf. Mit Hilfe des Hydraulikkolbens werden die Pressbacken derart verschoben und verschwenkt, dass ein radiales Verpressen eines Pressfitings erfolgen kann. Selbstverständlich kann das erfindungsgemäße Verfahren auch bei anderen Presswerkzeugen, die beispielsweise zum Verpressen von Kabelschuhen und dergleichen geeignet sind, angewendet werden. Der Hydraulikkolben befindet sich in einem Hydraulikzylinder, wobei zum Verschieben des Kolbens ein Fluid von einer über einen Elektromotor angetriebene Hydraulikpumpe gepumpt wird. Ferner weist der Hydraulikzylinder ein Ventil, wie ein Überdruckventil auf, das bei Erreichen eines Grenzdrucks, das heißt bei Erreichen der erforderlichen Presskraft öffnet. Beim Vorsehen eines Überdruckventils erfolgt das Öffnen des Ventils aufgrund des in dem Zylinder herrschenden Drucks. Zum Betätigen des Presswerkzeuges wird somit der Hydraulikkolben in dem Hydraulikzylinder durch Zufuhr von Hydraulikfluid über eine elektrisch angetriebene Hydraulikpumpe bewegt. Bei Erreichen des Grenzdrucks öffnet sodann das in dem Hydraulikzylinder angeordnete Ventil, so dass das Fluid in ein Reservoir zurückströmen und gleichzeitig der Hydraulikkolben zurückgeschoben bzw. zurückgezogen werden kann. Das Zurückbewegen des Hydraulikkolbens kann mechanisch durch eine Feder erfolgen.

Zum Abschalten des Elektromotors bei Erreichen des Grenzdrucks, um ein weiteres Fördern von Fluid in den Hydraulikzylinder zu unterbinden, erfolgt erfindungsgemäß ein Detektieren eines Stromabfalls beim Öffnen des Ventils. Ein Abschalten des Elektromotors erfolgt jedoch nicht bereits aufgrund eines Stromabfalls, sondern erst wenn der Strom um einen vorgegebenen Wert sinkt. Ferner kann ein Abschalten des Elektromotors erfolgen, wenn der Stromabfall über eine vorgegebene Zeitspanne erfolgt, wobei diese beiden Bedingungen auch miteinander verknüpft werden können.

Erfindungsgemäß erfolgt somit das Detektieren des Öffnens des Ventils aufgrund einer Stromänderung, unabhängig von Absolutwerten. Dies hat den erfindungswesentlichen Vorteil, dass es für das Abschalten des Elektromotors unerheblich ist, bei welchem Maximalstrom das Ventil öffnet, bzw. geöffnet wird. Das Abschalten des Elektromotors ist somit unabhängig von Einflüssen wie dem Zustand des Hydraulikfluids, Verschleißgrades der Mechanik, etc. Dies ist insbesondere von Bedeutung, da das Abschalten des Elektromotors nach einer vorgegebenen Änderung des Stroms und/oder nach einer vorgegebenen Zeitspanne erfolgt. Der Strom muss somit nach dem Öffnen des Ventils nicht bis zu einem unteren Grenzwert, wie einem Stoppstrom sinken. Vielmehr reicht ein Abfall des Stroms um einen vorgegebenen Wert oder ein Abfallen des Stroms über eine vorgegebene Zeitspanne. Dies hat zur Folge, dass der Elektromotor stets nach einer klar definierten Regel nach dem Öffnen des Ventils abgeschaltet wird und somit das Fördern von Fluid durch den Elektromotor in den Hydraulikzylinder nach dem Öffnen des Ventils auf eine möglichst geringe Menge reduziert ist.

Aufgrund der erfindungsgemäßen Verknüpfung des detektierten Stromabfalls mit einer Änderung des Strom um einen vorgegebenen Wert und/oder einem Sinken des Stroms über eine vorgegebene Zeitspanne, ist ferner vermieden, dass bei ggf. während des Pressvorgangs auftretenden kurzfristigen geringen Stromabfällen, der Elektromotor abgeschaltet wird. Derartige kurzfristige Stromabfälle können z. B. durch Veränderungen der Reibungsverhältnisse während des Pressvorgangs hervorgerufen werden.

Bei dem vorgegebenen insbesondere in einem Mikroprozessor abgespeicherten Stromwert, kann es sich um einen Absolutenwert handeln. Bevorzugt ist es den Wert als prozentualen Anteil des unmittelbar vor dem Öffnen des Ventils anliegenden Stroms zu ermitteln. Vorzugsweise ist der Stromwert ein prozentualer Anteil des maximal während des Pressvorgangs herrschenden Stroms. Berücksichtigt wird hierbei vorzugsweise nicht der unmittelbar nach Einschalten des Presswerkzeuges auftretende Spitzenstrom. Das Bestimmen des vorgegebenen Stromwertes als prozentualen Anteil eines Maximalwertes hat den Vorteil, dass bei unterschiedlichen Pressvorgängen unterschiedliche Maximalströme auftreten und somit das Abschalten des Elektromotors stets auf den spezifischen Pressvorgang abgestimmt ist. Vorzugsweise liegt der prozentuale Anteil im Bereich von 2 bis 20 %, vorzugsweise, 2 bis 10% und insbesondere 2 bis 5%.

Auch bei der vorgegebenen Zeitspanne kann es sich um einen prozentualen Anteil des gesamten Pressvorgangs handeln. Dieser prozentuale Anteil liegt insbesondere im Bereich von 2 - 20 %, vorzugsweise 2 bis 10 % und insbesondere 2 bis 5 %.

Bei einer bevorzugten Ausführungsform der Erfindung wird die Stromänderung unmittelbar von einer den Elektromotor steuernden Steuereinrichtung, die insbesondere eine Platine und/oder einen Mikroprozessor umfasst, erfasst.

Bei einer bevorzugten Weiterbildung des erfindungsgemäßen Verfahrens, erfolgt ein automatisches vollständiges Abschließen des Pressvorgangs. Hierzu wird nach dem Betätigen des Presswerkzeugs, d. h. nach dem Einschalten des Elektromotors, ein Minimalstrom detektiert. Dieser Minimalstrom tritt auf, nachdem unmittelbar nach dem Anschalten des Elektromotors kurzfristig ein hoher Anschaltstrom auftritt. Auf Basis des detektierten Minimalstroms wird ein Startstrom bestimmt. Ab Erreichen des Startstroms erfolgt sodann ein automatisches vollständiges Abschließen des Pressvorgangs. Dies bedeutet, dass, sobald der Startstrom erreicht ist, ein Betätigungsschalter vom Benutzer losgelassen werden kann, und der Pressvorgang dennoch nicht unterbrochen wird. Eine Unterbrechung des Pressvorgangs ist nach Erreichen des Startstroms nur noch durch Betätigen eines Entlastungsschalters möglich.

Der Startstrom kann um einen vorgegebenen, insbesondere in der Elektronik des Elektromotors abgespeicherten festen Wert größer als der Minimalstrom sein. Bevorzugt ist es jedoch, dass der Startstrom nicht um einen festen vorgegebenen Wert größer als der Minimalstrom, sondern um einen vorgegebenen prozentualen Anteil höher als der Minimalstrom ist. Der prozentuale Anteil liegt vorzugsweise bei 2 bis 20 %, insbesondere bei 2 bis 10 % und besonders bevorzugt bei 2 bis 5 %.

Sobald der Pressvorgang somit gestartet ist, kann der Starttaster vom Bediener losgelassen werden, ohne dass hierdurch der Pressvorgang unterbrochen wird. Dies hat den Vorteil, dass ein Benutzer beispielsweise nicht kurz vor Beendigung des Pressvorgangs den Starttaster loslässt und hiermit den Pressvorgang vorzeitig abbricht. Ein Unterbrechen des Pressvorgangs ist somit nur noch durch Betätigen eines Entlastungsschalters möglich. Da es sich hierbei um ein bewusstes Unterbrechen des Pressvorgangs handelt, weiß der Benutzer, dass keine ordnungsgemäße Verpressung erfolgt ist. Der Entlastungsschalter weist beispielsweise ein Handentriegelungsventil auf, oder steuert das in dem Hydraulikzylinder angeordnete Ventil an.

Anstelle des Detektierens von Stromwerten sowie Stromänderungen ist es auch möglich, die vorstehend beschriebenen erfindungsgemäßen Verfahren anhand von Spannungswerten und Spannungsänderungen durchzuführen.

Nachfolgend wird die Erfindung anhand einer bevorzugten Ausführungsform unter Bezugnahme auf die anliegenden Zeichnungen näher erläutert.

Es zeigen:

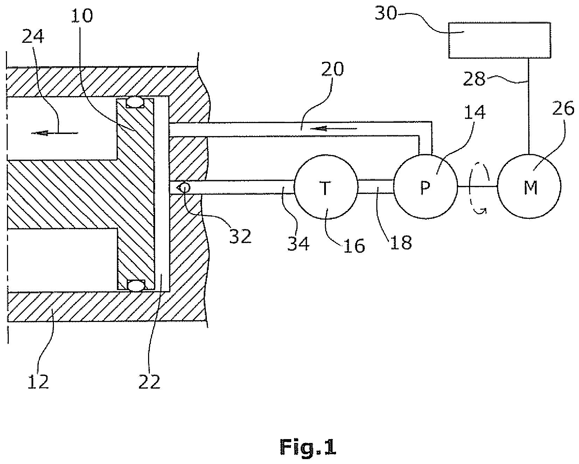

- Fig. 1: eine schematische Schnittansicht eines elektrohydraulischen Pressewerkzeuges zur Durchführung des erfindungsgemäßen Verfahrens, und
- Fig. 2: ein Diagramm des Stroms über der Zeit bei einem Pressvorgang.

Ein Presswerkzeug weist einen Hydraulikkolben 10 auf, der in einem Zylinder 12 angeordnet ist Der Hydraulikkolben 10 ist mit nicht dargestellten Pressbacken oder anderen Werkzeugen des Presswerkzeuges verbunden. Mit Hilfe einer Hydraulikpumpe 14 wird ein Hydraulikfluid aus einer Reservoir 16 über Leitungen 18, 20 einem Kolbenraum 22 zugeführt. Hierdurch wird der Kolben 10 zur Betätigung des Presswerkzeuges in Richtung eines Pfeils 24 bewegt.

Die Hydraulikpumpe 14 wird von einem Elektromotor 26 angetrieben, der über eine elektrische Leitung 28 mit einer Steuereinrichtung 30 verbunden ist.

Bei Erreichen eines Grenzdrucks in dem Kolbenraum 22 öffnet, im dargestellten Ausführungsbeispiel ein mechanisches Überdruckventil 32. Hierdurch kann das Hydraulikfluid aus dem Kolbenraum 22 durch die Leitung 34 in das Reservoir 16 zurückströmen. Der Hydraulikkolben 10 wird mechanisch durch eine nicht dargestellte Feder in seine Ausgangsposition zurückgedrückt.

Unmittelbar nach Öffnen des Überdruckventils 32 erfolgt mit Hilfe des erfindungsgemäßen Verfahrens ein Abschalten des Elektromotors 26.

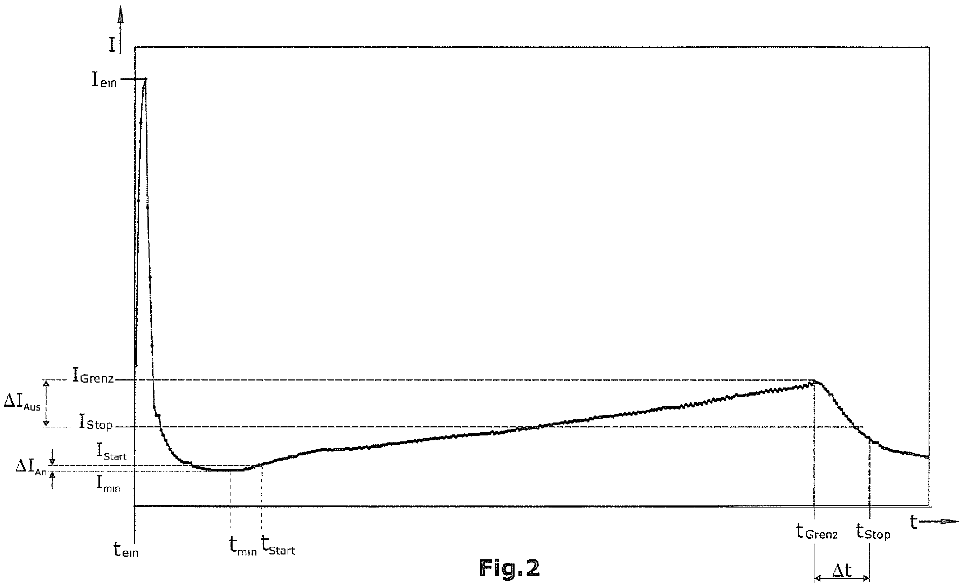

Aus dem in Fig. 2 dargestellten Diagramm des Stroms über der Zeit ist ersichtlich, dass zu einem Zeitpunkt tₑᵢₙ ein Startschalter des Presswerkzeuges gedrückt wird. Dies führt zu einem kurzfristigen starken Anstieg des Stroms auf einen Wert Iₑᵢₙ. Der Einschaltstrom Iₑᵢₙ fällt unmittelbar nach dem Einschalten des Presswerkzeuges wieder ab, so dass zu einem Zeitpunkt tₛₜₐᵣₜ der Pressvorgang als gestartet von der Steuereinrichtung 30 detektiert werden kann. Bei der bevorzugten Ausführungsform des erfindungsgemäßen Steuerverfahrens, das eine selbstständige Erfindung darstellt, führt diese Detektion dazu, dass auch wenn der Startschalter vom Benutzer losgelassen wird, der Pressvorgang nicht mehr unterbrochen wird, bis der Grenzdruck erreicht ist und das Überdruckventil öffnet. In besonders bevorzugter Ausführungsform werden hierbei nicht Zeitpunkte detektiert, sondern Ströme bestimmt. Insbesondere erfolgt nach dem Einschalten des Motors ein Detektieren des Minimalstroms Iₘᵢₙ. Ausgehend von dem Minimalstrom Iₘᵢₙ wird ein Startstrom Iₛₜₐᵣₜ bestimmt. Dies erfolgt insbesondere durch eine Berechnung in der Steuereinrichtung. Vorzugsweise wird der Startstrom Iₛₜₐᵣₜ dadurch bestimmt, dass der Minimalstrom Iₘᵢₙ um einen vorgegebenen prozentualen Anteil erhöht wird. Der Startstrom Iₛₜₐᵣₜ beträgt beispielsweise 110 % des Minimalstroms Iₘᵢₙ. Sobald sich durch die Verpressung die Last erhöht, erfolgt ein im Wesentlichen stetiger Anstieg des Stroms bis auf einen Wert I_{Grenz}. Der Grenzstrom I_{Grenz} entspricht dem Grenzdruck, bei dem das Überdruckventil 32 öffnet. Das Öffnen des Überdruckventils 32 führt unmittelbar zu einem Stromabfall, ab dem Zeitpunkt t_{Grenz}. Dieser Stromabfall an dem Elektromotor 26 wird von der Steuereinrichtung 30 detektiert. Bei Änderung des Stroms um einen vorgegebenen Wert ΔI erfolgt automatisch ein Abschalten des Elektromotors. Dies führt dazu, dass, nicht wie in dem Diagramm dargestellt, der Strom über die Zeit weiter sinkt, sondern unmittelbar auf 0 abfällt.

Zusätzlich oder anstatt der Bestimmung eines vorgegebenen Stromwertes ΔI kann auch ein Abfallen des Stroms ab dem Grenzstrom I_{Grenz}, durch den ein Zeitpunkt t_{Grenz} definiert ist, über eine Zeitspanne Δt detektiert werden. Dies führt sodann zum Abschalten des Elektromotors 26 zu einem Zeitpunkt t_{Stop}, und führt sodann, entgegen der Darstellung in Fig. 2 unmittelbar zu einem Abfallen des Stroms auf 0,

Insbesondere können die beiden Voraussetzungen zum Abschalten des Elektromotors 26 miteinander verknüpft werden. Beispielsweise kann vorgesehen werden, dass beide Voraussetzungen, oder nur eine der beiden Voraussetzungen erfüllt sein muss, um ein Abschalten des Motors durchzuführen.

Eine entsprechende Steuerung kann auch anhand der Spannungsänderung erfolgen.

## Patentansprüche

1. Verfahren zum automatischen Steuern eines elektro-hydraulischen Presswerkzeuges, insbesondere zur Herstellung von Rohverbindungen, bei welchem
zum Betätigen des Presswerkzeuges ein Hydraulikkolben (10) bewegt wird, indem von einer, mittels eines Elektromotors (26) angetriebenen Hydraulikpumpe (14) Fluid in einen Hydraulikzylinder (12) gepumpt wird,
ein mit dem Hydraulikzylinder (12) verbundenes Ventil (32) bei Erreichen eines Grenzdrucks geöffnet wird,
ein Stromabfall beim Öffnen des Ventils (32) detektiert wird,
**dadurch gekennzeichnet, dass**
der Stromabfall beim Öffnen des Ventils (32) unabhängig von Absolutwerten detektiert wird, und
der Elektromotor (26) ausgeschaltet wird, wenn der Strom um einen vorgegebenen Strom-Wert (AI,) sinkt und/oder der Strom über eine vorgegebene Zeitspanne (Δt) nach Erreichen eines Grenzstroms (I_{Grenz}) abnimmt.

2. Verfahren nach Anspruch 1, bei welchem der vorgegebene Stromwert ein prozentualer Anteil des unmittelbar vor dem Öffnen des Ventils (32) anliegenden Stroms ist.

3. Verfahren nach Anspruch 1, bei welchem der vorgegebene Stromwert ein prozentualer Anteil des maximal während des Pressvorgangs herrschenden Stroms ist.

4. Verfahren nach einem der Ansprüche 1-3, bei welchem
ein Startstrom (Iₛₜₐᵣₜ) in Abhängigkeit eines nach dem Anschalten des Elektromotors (26) detektierten Minimalstroms (Iₘᵢₙ) bestimmt wird und
ab Erreichen des Startstroms (Iₛₜₐᵣₜ) der Pressvorgang automatisch vollständig abgeschlossen wird.

5. Verfahren nach Anspruch 4, bei welchem der Startstrom (Iₛₜₐᵣₜ) um einen vorgegebenen prozentualen Anteil höher als der Minimalstrom (Iₘᵢₙ) ist.

6. Verfahren nach Anspruch 4 oder 5, bei welchem der Pressvorgang nur noch durch Betätigen eines Entlastungsschalters unterbrochen werden kann.

7. Verfahren nach einem der Ansprüche 4 bis 6, bei welchem der Elektromotor (26) nach Abschluss des Pressvorgangs gemäß dem in einem er Ansprüche 1 bis 3 definierten Verfahren abgeschaltet wird.

8. Verfahren nach Anspruch 2, 3 oder 5, bei welchem der prozentuale Anteil 2 bis 20%, insbesondere 2 bis 10% und besonders bevorzugt 2 bis 5 % beträgt.

9. Verfahren nach einem der Ansprüche 1 bis 8, bei welchem die Strom- und/oder Spannungsänderung unmittelbar von einer den Elektromotor (26) steuernden Steuereinrichtung (30) erfasst wird.

## Claims

1. A method for automatically controlling an electrohydraulic pressing tool, in particular for producing pipe connections, wherein
to actuate the pressing tool, a hydraulic piston (10) is moved, in that fluid is pumped into a hydraulic cylinder (12) by a hydraulic pump (14) driven by means of an electric motor (26),
a valve (32) connected to the hydraulic cylinder (12) is opened when a limiting pressure is reached,
a current drop is detected when the valve (32) opens,
**characterized in that**
the current drop is detected, when the valve (32) opens, independently of absolute values, and
the electric motor (26) is switched off when the current falls by a predetermined current value (ΔI) and/or the current decreases over a predetermined time period (Δt) after reaching a limiting current (Iₗᵢₘᵢₜ).

2. The method according to claim 1, wherein said predetermined current value is a percentage of the current applied immediately prior to the opening of the valve (32).

3. The method according to claim 1, wherein said predetermined current value is a percentage of the maximum current prevailing during the pressing process.

4. The method according to any one of claims 1 - 3, wherein
a starting current (Iₛₜₐᵣₜ) is determined in dependence on a minimum current (Iₘᵢₙ) detected after the switch-on of the electric motor (26), and
the pressing process is automatically completely terminated when said starting current (Iₛₜₐᵣₜ) has been reached.

5. The method according to claim 4, wherein the starting current (Iₛₜₐᵣₜ) is by a predetermined percentage higher than the minimum current (Iₘᵢₙ).

6. The method according to claim 4 or 5, wherein the pressing process can be interrupted only by actuation of a relief switch.

7. The method according to any one of claims 4 to 6, wherein, after termination of the pressing process, the electric motor (26) is switched off according to the method defined in any one of claims 1 to 3.

8. The method according to claim 2, 3 or 5, wherein said percentage is 2 to 20 %, preferably 2 to 10 % and most preferably 2 to 5 %.

9. The method according to any one of claims 1 to 8, wherein the current and/or voltage change is detected directly by a control device (30) controlling the electric motor (26).

## Revendications

1. Procédé de commande automatique d'un outil de pressage électrohydraulique, en particulier pour la réalisation de raccords de tuyaux, dans lequel,
un piston hydraulique (10) est déplacé pour l'actionnement de l'outil de pressage par le fait que du fluide est pompé dans un cylindre hydraulique (12) par une pompe hydraulique (14) entraînée au moyen d'un moteur électrique (26),
une soupape (32) raccordée au cylindre hydraulique (12) est ouverte lorsqu'une pression limite est atteinte,
une baisse de courant est détecté lors de l'ouverture de la soupape (32),
**caractérisé en ce que**
la baisse de courant lors de l'ouverture de la soupape (32) est détectée indépendamment de valeurs absolues, et
le moteur électrique (26) est arrêté quand le courant baisse selon une valeur de courant (ΔI) prescrite et/ou quand le courant diminue pendant une durée (Δt) prescrite après qu'un courant limite (I_{Grenz}) a été atteint.

2. Procédé selon la revendication 1, dans lequel la valeur de courant prescrite est un pourcentage du courant présent juste avant l'ouverture de la soupape (32).

3. Procédé selon la revendication 1, dans lequel la valeur de courant prescrite est un pourcentage du courant régnant au maximum pendant le processus de pressage.

4. Procédé selon l'une des revendications 1 à 3, dans lequel
un courant de démarrage (Iₛₜₐᵣₜ) est défini en fonction d'un courant minimal (Iₘᵢₙ) détecté après la mise en marche du moteur électrique (26) et
le processus de pressage est automatiquement terminé complètement une fois atteint le courant de démarrage (Iₛₜₐᵣₜ).

5. Procédé selon la revendication 4, dans lequel le courant de démarrage (Iₛₜₐᵣₜ) est plus grand que le courant minimal (Iₘᵢₙ) selon un pourcentage prescrit.

6. Procédé selon la revendication 4 ou 5, dans lequel le processus de pressage ne peut plus être interrompu que par l'actionnement d'un interrupteur de décharge.

7. Procédé selon l'une des revendications 4 à 6, dans lequel, une fois le processus de pressage achevé, le moteur électrique (26) est arrêté selon le procédé défini dans l'une des revendications 1 à 3.

8. Procédé selon la revendication 2, 3 ou 5, dans lequel le pourcentage est compris entre 2 et 20 %, en particulier entre 2 et 10 % et de façon particulièrement préférée entre 2 et 5 %.

9. Procédé selon l'une des revendications 1 à 8, dans lequel la variation de courant et/ou de tension est détectée par un équipement de commande (30) commandant le moteur électrique (26).
